# FASCICULE DE BREVET EUROPEEN

(11) **EP 1 462 636 B1**
(45) Date de publication et mention de la délivrance du brevet: **27.06.2007**
(21) Numéro de dépôt: 04290773.3
(22) Date de dépôt: 23.03.2004
(51) Int. Cl.: F02D 19/06, F02D 41/38

(54) **Dispositif d'alimentation de moteur diesel**
Vorrichtung zur Speisung einer Diesel Brennkraftmaschine
Diesel engine feeding device

(30) Priorité: 27.03.2003 FR 0303772
(43) Date de publication de la demande: 29.09.2004
(73) Titulaire: Afhymat, 80700 Roye (FR)
(72) Inventeur: Koziarek, Franck, 60400 Noyon (FR); Cargnelutti, Laurent, 80000 Amiens (FR); Bonte, Frédéric, 60400 Noyon (FR)
(74) Mandataire: Kaspar, Jean-Georges

(56) Documents cités:
- FR-A- 2 794 171
- FR-A- 2 797 470
- GB-A- 2 264 272
- US-A- 4 620 568
- US-A- 5 555 873

## Description

L'invention est relative à un dispositif d'alimentation de moteur Diesel, destiné à assurer une sélection d'alimentation en fioul ou en gazole.

La législation française prévoit actuellement un régime fiscal différent pour les carburants destinés aux moteurs à explosion, particulièrement aux moteurs Diesel. L'utilisation de gazole est exigée pour les véhicules routiers en circulation, tandis que l'utilisation de fioul est autorisée pour les appareils statiques ou les véhicules utilisés à un emplacement déterminé pour entraîner un équipement de travail, par exemple à l'aide d'une prise de force.

La réglementation douanière autorise l'utilisation de dispositifs de sélection automatique en fioul ou en gazole, suivant l'utilisation du véhicule. Cependant, les dispositifs de sélection automatique agréés par l'administration des douanes et droits indirects doivent être protégés contre toute modification de fonctionnement susceptible de permettre une utilisation frauduleuse non autorisée de carburant.

Le document EP 1 124 048 décrit un dispositif de double alimentation carburant pour moteur Diesel. Le dispositif comporte un réservoir supplémentaire de fioul domestique, un pré-filtre séparateur d'eau, une pompe d'alimentation électrique, une tuyauterie polyamide pour l'alimentation et le retour, un filtre à carburant classique à deux cartouches monté en série dans le circuit de fioul domestique, un clapet anti-retour sur l'alimentation de fioul et un autre clapet anti-retour sur l'alimentation de gazole, ainsi qu'une électrovanne à trois voies qui pilote les retours de carburant et assure le rinçage de la pompe d'injection. Cette pompe d'injection est commandée par un microprocesseur qui temporise la fermeture de retour de fioul domestique dans le réservoir. Une électrovanne à trois voies permet la circulation de gazole en bypasse vers le réservoir pour éviter à la pompe d'alimentation du constructeur de tourner à vide pendant la fonction statique du véhicule.

Le dispositif est conforme à l'Arrêté du 29 avril 1970 du Ministère des Transports, et permet d'utiliser le fioul domestique comme carburant pour faire fonctionner un appareil auxiliaire avec le moteur principal du véhicule.

Le dispositif du document EP 1 124 048A1 présente cependant l'inconvénient selon lequel le montage de ce dispositif sur un véhicule nécessite des opérations longues et coûteuses et des transformations à divers endroits du véhicule pour mettre en place les éléments de ce dispositif.

Un but de l'invention est de remédier à l'état de la technique connu, notamment d'après le document EP 0 124 048 A1, en fournissant un nouveau dispositif de construction simple et économique de mise en place facile et peu onéreuse.

L'invention a pour objet un dispositif d'alimentation de moteur diesel, destiné à assurer une sélection d'alimentation en fioul ou en gazole, caractérisé en combinaison par le fait que le dispositif présente un coffret de commande relié à un bloc comprenant des composants de circulation de fluide, par le fait que le bloc comprenant des composants de circulation de fluide est relié à un réservoir de gazole par seulement une canalisation et à un réservoir de fioul par deux canalisations et par le fait que le bloc comprenant des composants de circulation de fluide est relié au système d'injection du moteur Diesel uniquement par une canalisation d'alimentation et une canalisation de retour, de manière à permettre une installation du dispositif sans intervention sur le système d'injection du moteur Diesel auquel le dispositif est destiné.

Selon d'autres caractéristiques alternatives de l'invention :
- le coffret de commande est relié à un moyen d'indication sur le tableau de bord du véhicule auquel le dispositif est destiné ;
- le bloc comprenant des composants de circulation de fluide comporte deux électrovannes à trois voies : une électrovanne d'alimentation et une électrovanne de retour ;
- le bloc comprenant des composants de circulation de fluide comporte un pressostat coopérant avec une électrovanne de retour au réservoir de fioul ;
- le coffret de commande contient deux relais de commande d'électrovanne et une temporisation destinée à retarder le recyclage du carburant et à envoyer le carburant au réservoir de fioul, lors du passage du fioul au gazole ;
- le bloc comprenant des composants de circulation de fluide supporte directement un récipient transparent permettant la visualisation directe de la couleur du carburant ;
- le bloc comprenant des composants de circulation de fluide comporte ou coopère avec un refroidisseur de carburant placé sur une canalisation de retour de carburant ;
- le coffret de commande électrique comporte de préférence des entrées reliées à un premier moyen de signalisation du niveau haut de carburant et un deuxième moyen de signalisation du niveau bas de carburant.
- le coffret de commande électrique est constitué sous forme d'une carte électronique intégrant une temporisation et insérée dans un boîtier fermé pour empêcher toute modification de fonctionnement.
- la carte électronique comporte un microcontrôleur pour programmer cette temporisation et pour assurer des fonctions prioritaires de sécurité et des fonctions nominales

L'invention sera mieux comprise grâce à la description qui va suivre donnée à titre d'exemple non limitatif en référence aux dessins annexés dans lesquels :
- La figure 1 représente schématiquement, une vue générale du dispositif selon l'invention illustrant sa facilité de mise en place.
- La figure 2 représente schématiquement, une vue générale du circuit de circulation de fluide d'un dispositif selon l'invention.
- La figure 3 représente schématiquement, une vue d'un schéma électrique de commande de dispositif selon l'invention.
- La figure 4 représente schématiquement, une vue d'un autre schéma électrique de commande de dispositif selon l'invention.

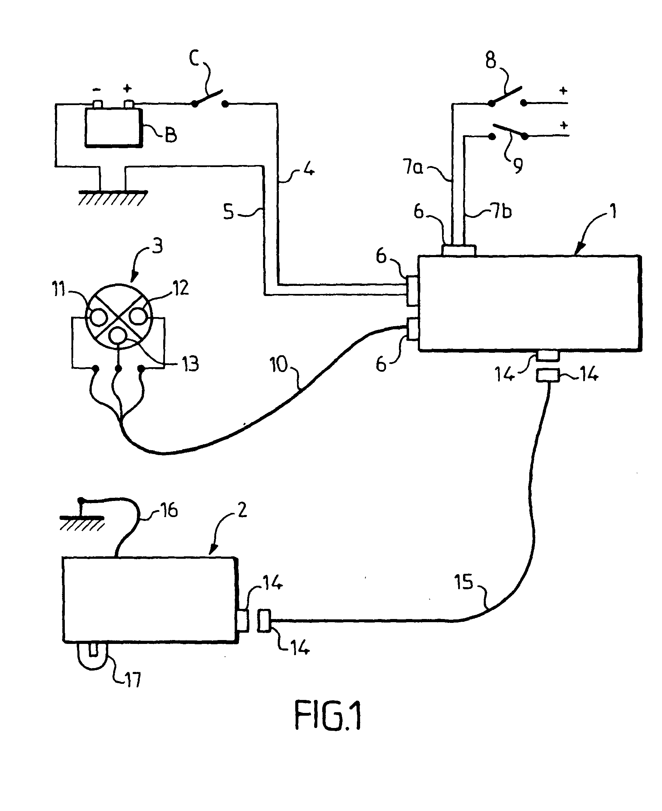

En référence aux figures 1 à 4, les éléments identiques ou fonctionnellement équivalents sont repérés par des chiffres de référence identique.

Sur la figure 1, un dispositif selon l'invention comporte un module de commande 1 et un bloc de circulation de fluide 2 ; ainsi qu'un moyen de visualisation 3 destiné à être monté sur le tableau de bord du véhicule à équiper.

Le coffret de commande 1 est alimenté par un moyen d'énergie électrique du véhicule, par exemple par la batterie électrique B du véhicule après fermeture du contact électrique C par l'intermédiaire de la clé de démarrage.

L'alimentation du coffret de commande 1 se fait ainsi à travers un faisceau à deux conducteurs isolés 4 et 5 reliés à travers un presse-étoupe 6 à l'intérieur du coffret de commande 1.

Le coffret de commande 1 reçoit également deux signaux de commande par l'intermédiaire d'un faisceau à deux conducteurs isolés 7a, 7b passant par un presse-étoupe 6 pour être reliés à l'intérieur du coffret de commande.

Le premier conducteur 7a transmet le signal correspondant à un premier contact 8 indiquant le serrage du frein de parc du véhicule. Le deuxième conducteur 7b transmet le signal correspondant à un deuxième contact 9 indiquant la mise en route d'une prise de force ou d'un moyen d'utilisation à l'arrêt du véhicule pour l'entraînement d'un équipement auxiliaire.

Une première sortie du coffret de commande à travers un presse-étoupe 6 d'un câble conducteur 10 à trois brins isolés permet d'indiquer l'état du dispositif au tableau de bord du véhicule. A cet effet, le câble 10 à plusieurs brins conducteurs isolés, par exemple à trois fils conducteurs isolés, alimente un ensemble d'indication comprenant trois diodes électroluminescentes destinées à indiquer les trois états possibles du dispositif.

Le premier état possible du dispositif correspondant à l'allumage d'une diode électroluminescente 11, par exemple de couleur verte, indique un bon fonctionnement du dispositif et une alimentation du moteur en gazole.

Un deuxième état du dispositif correspondant à un bon fonctionnement du dispositif et à une alimentation du moteur Diesel en fioul est indiqué par l'allumage de la diode électroluminescente 12, par exemple de couleur rouge.

Un troisième état du dispositif correspondant à un mauvais fonctionnement du dispositif nécessitant une intervention est indiqué par l'allumage de la diode électroluminescente 13, par exemple de couleur orange.

L'invention n'est pas limitée à cette affectation de couleurs et peut par exemple comprendre des autres moyens indicateurs clignotants ou non et comportant ou non une indication supplémentaire, par exemple la lettre G pour gazole et F pour fioul.

Le coffret 1 de commande électrique est relié au module 2 de circulation de fluide par des connecteurs 14 coopérant avec un faisceau de câbles 15 de longueur importante, par exemple d'environ 10 mètres.

Le module 2 de circulation de fluide est mis extérieurement à la masse par l'intermédiaire d'un câble de masse 16 et présente un récipient 17 transparent permettant de visualiser le carburant actuellement en utilisation aux fins de contrôle visuel direct du bon fonctionnement du dispositif.

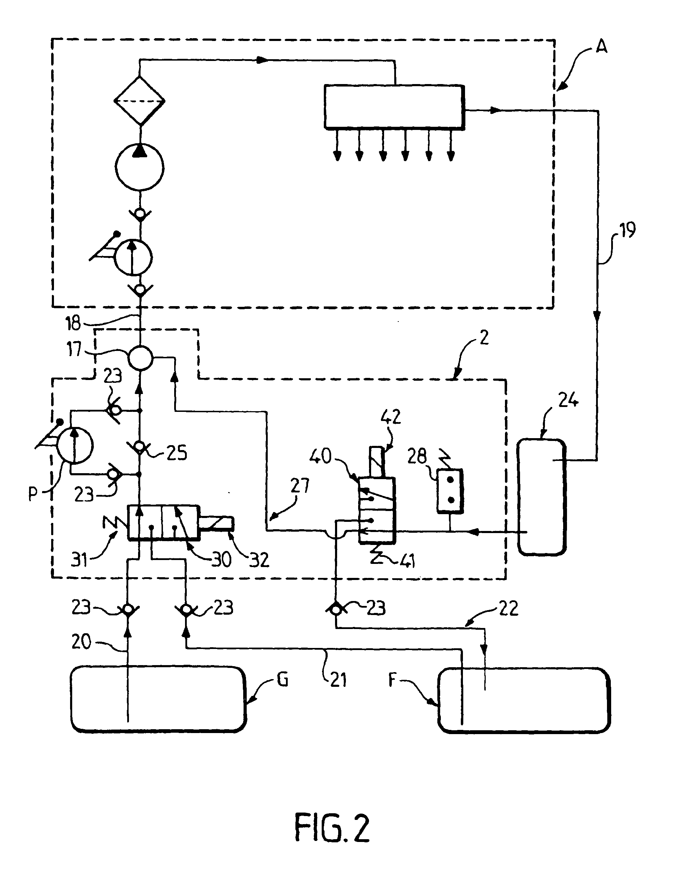

Sur la figure 2, le bloc 2 de circulation de fluide est relié d'une part au système A d'injection installé par le constructeur du véhicule, et d'autre part à un premier réservoir F de fioul et un deuxième réservoir G de gazole.

Le système A d'injection du constructeur du véhicule comporte par exemple deux clapets anti-retour, une pompe d'amorçage manuelle, une pompe d'alimentation, un filtre à gazole et une rampe d'injection montée sur le moteur Diesel non représenté.

L'invention permet de connecter le dispositif selon l'invention au système d'injection A du constructeur uniquement par l'intermédiaire de deux canalisations, une canalisation 18 d'alimentation et une canalisation 19 de retour de carburant.

Aucune autre modification n'est nécessaire sur le système d'injection A du constructeur du véhicule routier.

L'invention permet également de se relier aux réservoirs F et G uniquement par l'intermédiaire de trois canalisations : la canalisation 20 existante d'alimentation en gazole, une canalisation 21 d'alimentation en fioul, et une canalisation 22 de retour de carburant dans le réservoir F de fioul.

On prévoit avantageusement de monter des clapets anti-retour 23 dans le sens correspondant au sens de circulation retenu pour les fluides sur les canalisations 20, 21, 22, en vissant directement ces clapets anti-retour sur le bloc 2 de circulation de fluide, ou de préférence en usinant directement les passages correspondants dans le bloc 2.

On peut également prévoir avantageusement un refroidisseur 24 monté par joint et bride sur une face du bloc 2 de circulation de fluide.

Le bloc 2 de circulation de fluide comporte de préférence une pompe d'amorçage manuelle P montée de manière classique avec interposition de deux clapets anti-retour 23 en bypasse d'un clapet anti-retour central 25.

Le bloc 2 de circulation de fluide présente sur le circuit d'alimentation une électrovanne 30 à trois voies précontrainte en position d'alimentation en gazole par l'intermédiaire d'un moyen ou d'un rappel élastique 31 intégré à l'électrovanne, et commandé par une bobine 32 à action permanente en position d'alimentation en fioul lorsque la bobine de commande 32 est mise sous tension par le coffret de commande 1.

Dans le sens de circulation représenté à la figure 2, la rampe d'injection est alimentée en gazole par l'intermédiaire de la canalisation 20 d'alimentation.

Le bloc 2 de circulation de fluide comporte également une électrovanne 40 de retour à trois voies précontrainte en position de recyclage de carburant dans la tubulure 27 de recyclage par un moyen élastique 41.

L'électrovanne 40 comporte également une bobine 42 à action permanente pour commander l'électrovanne 40 dans une position correspondant au retour du carburant dans le réservoir F de fioul.

Un pressostat 28 est prévu pour éviter la surpression du circuit de fluide et activer l'électrovanne 40 dans le sens correspondant au retour carburant dans le réservoir F de fioul en cas de montée excessive de pression dans le circuit de fluide.

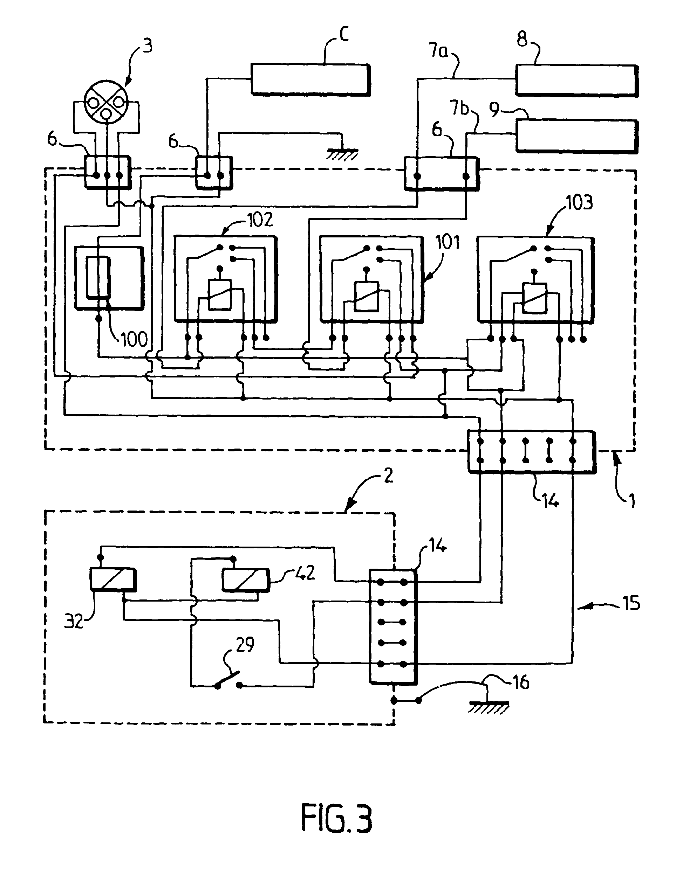

Sur la figure 3, la représentation du bloc de circulation 2 de fluide a été simplifiée en représentant uniquement les éléments électriques actifs des électrovannes 30 et 40 et du pressostat 28.

Le contact du pressostat 28 est schématisé par l'interrupteur 29 qui est relié en série avec l'alimentation de la bobine 42 de l'électrovanne 40 de retour de fluide.

Le coffret de commande électrique 1 comporte de préférence un fusible 100 monté en série sur l'alimentation principale passant à travers le presse-étoupe 6 pour alimenter le coffret de commande. Le coffret de commande 1 contient également un premier relais d'activation 101 recevant le signal 8 d'arrêt du véhicule et le signal 9 de prise de mouvement pour activer le deuxième relais 102 et la temporisation 103 en vue de permettre le passage du carburant au fioul (fonctionnement à l'arrêt) au lieu du gazole (fonctionnement en circulation routière).

Le rôle de la temporisation 103 est de permettre lors du passage inverse du fioul au gazole de retarder le changement de position de l'électrovanne 40, en continuant le retour du carburant pendant une durée prédéterminée dans le réservoir F de fioul. Ce retard au changement de l'électrovanne 40 permet ainsi de visualiser rapidement le changement de carburant dans le récipient en verre 17 et permet à l'administration douanière de constater un bon fonctionnement du dispositif en circulation routière, sans présence de coloration parasite du carburant dans l'ampoule en verre 17 susceptible de faire douter du bon fonctionnement du dispositif.

Lors du changement de carburant de gazole à fioul, cette temporisation 103 reste inactive.

Enfin, l'allumage des diodes électroluminescentes de l'ensemble indicateur 3 permet de vérifier en permanence au tableau de bord le bon fonctionnement du dispositif.

Le coffret 1 de commande électrique est relié au module 2 de circulation de fluide par des connecteurs 14 coopérant avec un faisceau de câbles 15 de longueur importante, par exemple d'environ 10 mètres.

Le module 2 de circulation de fluide est mis extérieurement à la masse par l'intermédiaire d'un câble de masse 16 et présente un récipient 17 transparent permettant de visualiser le carburant actuellement en utilisation aux fins de contrôle visuel direct du bon fonctionnement du dispositif.

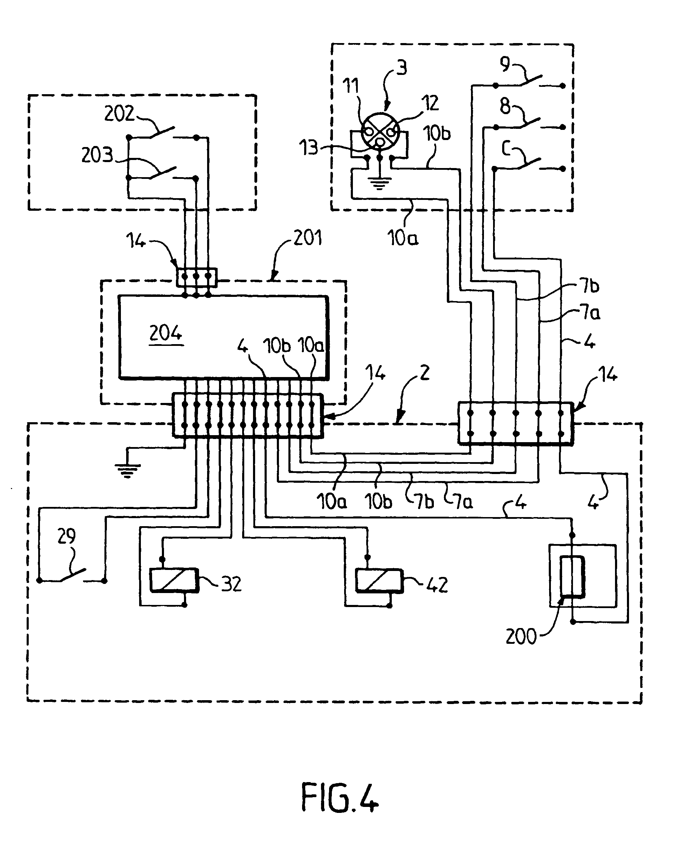

Sur la figure 4, un autre coffret de commande 201 est alimenté par un moyen d'énergie électrique du véhicule, par exemple par la batterie électrique du véhicule après fermeture du contact électrique C par l'intermédiaire de la clé de démarrage.

L'alimentation du coffret de commande 201 se fait entre la masse et un câble ou un conducteur isolé 4 relié avec interposition d'un fusible 200 en série situé à l'intérieur du module 2 de circulation de fluide. Sur la figure 4, la représentation du bloc ou module de circulation 2 de fluide a été simplifiée en représentant uniquement les éléments électriques actifs des composants hydrauliques décrits en référence à la figure 2.

Le coffret de commande 201 reçoit également deux signaux de commande par l'intermédiaire de deux conducteurs isolés 7a, 7b passant par l'intérieur du module 2 de circulation de fluide.

Le premier conducteur 7a transmet le signal correspondant à un premier contact 8 indiquant le serrage du frein de parc du véhicule. Le deuxième conducteur 7b transmet le signal correspondant à un deuxième contact 9 indiquant la mise en route d'une prise de force ou d'un moyen d'utilisation à l'arrêt du véhicule pour l'entraînement d'un équipement auxiliaire.

Le coffret de commande 201 fournit des signaux permettant d'indiquer l'état du dispositif au tableau de bord du véhicule. A cet effet, deux fils conducteurs isolés 10a, 10b sont reliés à un ensemble d'indication comprenant trois diodes électroluminescentes destinées à indiquer les trois états possibles du dispositif.

Le premier état possible du dispositif correspondant à l'allumage d'une diode électroluminescente 11, par exemple de couleur verte, indique un bon fonctionnement du dispositif et une alimentation du moteur en gazole.

Un deuxième état du dispositif correspondant à un bon fonctionnement du dispositif et à une alimentation du moteur Diesel en fioul est indiqué par l'allumage de la diode électroluminescente 12, par exemple de couleur rouge.

Un troisième état du dispositif correspondant à un mauvais fonctionnement du dispositif nécessitant une intervention est indiqué par l'allumage de la diode électroluminescente 13, par exemple de couleur orange.

L'invention n'est pas limitée à cette affectation de couleurs et peut par exemple comprendre des autres moyens indicateurs clignotants ou non et comportant ou non une indication supplémentaire, par exemple la lettre G pour gazole et F pour fioul.

Le coffret 201 de commande électrique est relié directement au module 2 de circulation de fluide par un connecteur 14.

Le module 2 de circulation de fluide est mis extérieurement à la masse par l'intermédiaire d'un câble de masse non représenté et présente avantageusement un récipient transparent non représenté permettant de visualiser le carburant actuellement en utilisation aux fins de contrôle visuel direct du bon fonctionnement du dispositif. L'invention permet de connecter le dispositif selon l'invention au système d'injection du constructeur uniquement par l'intermédiaire de deux canalisations, une canalisation non représentée d'alimentation et une canalisation non représentée de retour de carburant. Aucune autre modification n'est nécessaire sur le système d'injection du constructeur du véhicule routier. L'invention permet également de se relier aux réservoirs uniquement par l'intermédiaire de trois canalisations : une canalisation non représentée d'alimentation en gazole, une canalisation non représentée d'alimentation en fioul, et une canalisation non représenté de retour de carburant dans le réservoir de fioul.

Le bloc 2 de circulation de fluide comporte une électrovanne non représentée à trois voies précontrainte en position d'alimentation en gazole par l'intermédiaire d'un moyen ou d'un rappel élastique, et commandée par une bobine 32 à action permanente en position d'alimentation en fioul lorsque la bobine de commande 32 est mise sous tension par le coffret de commande 1. La bobine 32 à action permanente est reliée au coffret 201 de commande électrique par l'intermédiaire d'un connecteur 14.

Le bloc 2 de circulation de fluide comporte également une électrovanne non représentée de retour à trois voies précontrainte en position de recyclage de carburant par un moyen élastique, et commandée par une bobine 42 à action permanente en position correspondant au retour du carburant dans le réservoir de fioul, lorsque la bobine de commande 42 est mise sous tension par le coffret de commande 201. La bobine 42 à action permanente est reliée au coffret 201 de commande électrique par l'intermédiaire d'un connecteur 14.

Un pressostat de retour est prévu pour éviter la surpression du circuit de fluide et activer l'électrovanne de retour dans le sens correspondant au retour du carburant dans le réservoir de fioul en cas de montée excessive de pression dans le circuit de fluide. Le contact du pressostat de retour est schématisé par l'interrupteur 29 relié au coffret 201 de commande électrique par l'intermédiaire d'un connecteur 14.

Le coffret de commande électrique 201 comporte de préférence trois entrées reliées à un premier moyen 202 d'indication de niveau haut de carburant et un deuxième moyen 203 d'indication de niveau bas de carburant.

Selon un mode de réalisation préféré et avantageux, le coffret de commande électrique 201 est constitué sous forme d'une carte électronique 204 insérée dans un boîtier surmoulé par de la résine, de manière à empêcher toute modification de fonctionnement.

La carte électronique 204 intègre une temporisation en vue de permettre le passage du carburant au fioul (fonctionnement à l'arrêt) au lieu du gazole (fonctionnement en circulation routière).Le rôle de la temporisation est de permettre lors du passage inverse du fioul au gazole de retarder le changement de position de l'électrovanne de retour du carburant, en continuant le retour du carburant pendant une durée prédéterminée dans le réservoir de fioul. Ce retard au changement de l'électrovanne de retour du carburant permet ainsi de visualiser rapidement le changement de carburant dans le récipient en verre et permet à l'administration douanière de constater un bon fonctionnement du dispositif en circulation routière, sans présence de coloration parasite du carburant dans l'ampoule en verre susceptible de faire douter du bon fonctionnement du dispositif. Lors du changement inverse de carburant de gazole à fioul, cette temporisation reste inactive.

La carte électronique 204 peut intégrer un microcontrôleur pour programmer cette temporisation et pour assurer des fonctions prioritaires de sécurité et des fonctions nominales.

Les fonctions prioritaires de sécurité provoquent le maintien du dispositif en positions précontraintes de sécurité et sont relatives à un troisième état du dispositif de mauvais fonctionnement du dispositif indiqué par l'allumage de la diode électroluminescente 13, par exemple de couleur orange, dans les cas suivants : indication par le moyen 202 du niveau haut de carburant, indication par le moyen 203 du niveau bas de carburant, test de mauvais fonctionnement de la bobine 32 à action permanente en position d'alimentation en fioul, test de mauvais fonctionnement de la bobine 42 à action permanente en position correspondant au retour du carburant dans le réservoir de fioul.

Les fonctions prioritaires de sécurité modifient le maintien du dispositif en cas de surpression excessive dans le circuit de fluide en activant l'électrovanne de retour de carburant dans le réservoir de fioul, en laissant inchangé l'allumage de la diode électroluminescente en cours d'indication.

Les fonctions nominales provoquent le fonctionnement du dispositif en positions nominales et sont relatives aux états du dispositif dans les cas décrits en référence aux figures 1 à 3, selon les signaux délivrés à la carte électronique 204 par les contacts C, 8, 9, et selon le sens de changement de carburant correspondant éventuellement au démarrage d'une temporisation fournie par la carte électronique 204.

La carte électronique 204 intégrant une temporisation en vue de permettre le passage du carburant au fioul (fonctionnement à l'arrêt) au lieu du gazole (fonctionnement en circulation routière) est de préférence entièrement réalisée en composants statiques et ne comporte aucun relais, ce qui autorise sa connexion directe ou rapprochée du bloc hydraulique 2 et évite l'utilisation de composants mobiles antidéflagrants .

Par rapport à l'état de la technique connu du document EP 1 124 048 A1, on constate une simplification importante des moyens techniques à mettre en oeuvre : ainsi, on économise un filtre à carburant classique à deux cartouches qui doit être monté en série dans le circuit de fioul domestique, un microprocesseur coûteux destiné à temporiser la fermeture de retour de fioul domestique vers le réservoir, et une pompe électrique d'alimentation à débit fixe.

En outre, le dispositif selon l'invention ne nécessite aucune intervention sur le système d'injection A d'origine installé par le constructeur du véhicule et présente l'avantage d'une installation facilitée et d'une mise en oeuvre économique.

Il convient de préciser que le coffret de commande 1 ou 201 et le bloc 2 de circulation de fluide sont les seuls organes qui doivent être plombés ou verrouillés pour éviter une intervention frauduleuse sur leur fonctionnement.

L'invention décrite en référence à un mode de réalisation particulier n'y est nullement limitée, mais couvre au contraire toute modification de forme et toute variante de réalisation prévoyant une installation modulaire à l'aide d'un module de commande électrique et d'un module de circulation de fluide reliés simplement entre eux par un faisceau de commande à plusieurs conducteurs isolés.

## Revendications

1. Dispositif d'alimentation de moteur diesel, destiné à assurer une sélection d'alimentation en fioul ou en gazole, **caractérisé en** combinaison par le fait que le dispositif présente un coffret de (1, 201) commande relié (15) à un bloc (2) comprenant des composants de circulation de fluide, par le fait que le bloc (2) comprenant des composants de circulation de fluide est relié à un réservoir de gazole (G) par seulement une canalisation (20) et à un réservoir de fioul (F) par deux canalisations (21, 22) et par le fait que le bloc (2) comprenant des composants de circulation de fluide est relié au système (A) d'injection du moteur Diesel uniquement par une canalisation (18) d'alimentation et une canalisation (19) de retour, de manière à permettre une installation du dispositif sans intervention sur le système d'injection (A) du moteur Diesel auquel le dispositif est destiné.

2. Dispositif selon la revendication 1, **caractérisé par le fait que** le coffret (1,201) de commande est relié à un moyen d'indication (3, 11-13) sur le tableau de bord du véhicule auquel le dispositif est destiné.

3. Dispositif selon la revendication 1 ou la revendication 2, **caractérisé par le fait que** le bloc (2) comprenant des composants de circulation de fluide comporte deux électrovannes (30, 40) à trois voies : une électrovanne (30) d'alimentation et une électrovanne (40) de retour.

4. Dispositif selon l'une quelconque des revendications précédentes, **caractérisé par le fait que** le bloc (2) comprenant des composants de circulation de fluide comporte un pressostat (28) coopérant avec une électrovanne (40) de retour au réservoir de fioul (F).

5. Dispositif selon l'une quelconque des revendications précédentes, **caractérisé par le fait que** le coffret (1, 201) de commande contient deux relais (101, 102) de commande d'électrovanne (30, 40) et une temporisation (103) destinée à retarder le recyclage du carburant et à envoyer le carburant au réservoir de fioul (F), lors du passage du fioul au gazole.

6. Dispositif selon l'une quelconque des revendications précédentes, **caractérisé par le fait que** le bloc (2) comprenant des composants de circulation de fluide supporte directement un récipient (17) transparent permettant la visualisation directe de la couleur du carburant.

7. Dispositif selon l'une quelconque des revendications précédentes, **caractérisé par le fait que** le bloc (2) comprenant des composants de circulation de fluide comporte ou coopère avec un refroidisseur (24) de carburant placé sur une canalisation (19) de retour de carburant.

8. Dispositif selon l'une quelconque des revendications précédentes, **caractérisé par le fait que** le coffret de commande électrique (1, 201) comporte de préférence des entrées reliées à un premier moyen (202) de signalisation du niveau haut de carburant et un deuxième moyen (203) de signalisation du niveau bas de carburant.

9. Dispositif selon l'une quelconque des revendications précédentes, **caractérisé par le fait que** le coffret de commande électrique (201) est constitué sous forme d'une carte électronique (204) intégrant une temporisation et insérée dans un boîtier fermé pour empêcher toute modification de fonctionnement.

10. Dispositif selon la revendication 9, **caractérisé par le fait que** la carte électronique (204) comporte un microcontrôleur pour programmer cette temporisation et pour assurer des fonctions prioritaires de sécurité et des fonctions nominales.

## Claims

1. A feed device for a diesel engine, intended for selecting a supply of fuel oil or diesel oil, **characterised in** combination by the fact that the device has a control module (1, 201) connected (15) to a block (2) comprising fluid circulation components, by the fact that the block (2) comprising fluid circulation components is connected to a diesel oil reservoir (G) by only one line (20) and to a fuel oil reservoir (F) by two lines (21, 22), and by the fact that the block (2) comprising fluid circulation components is connected to the fuel injection system (A) of the diesel engine solely by one supply line (18) and one return line (19), so as to permit installation of the device without interfering with the fuel injection system (A) of the diesel engine for which the device is intended.

2. A device according to Claim 1, **characterised by** the fact that the control module (1, 201) is connected to an indicating means (3, 11-13) on the dashboard of the vehicle for which the device is intended.

3. A device according to Claim 1 or Claim 2, **characterised by** the fact that the block (2) comprising fluid circulation components comprises two three-way solenoid valves (30, 40): a supply valve (30) and a return valve (40).

4. A device according to any one of the preceding claims, **characterised by** the fact that the block (2) comprising fluid circulation components comprises a pressure switch (28) which cooperates with a solenoid valve (40) for returning to the fuel oil reservoir (F).

5. A device according to any one of the preceding claims, **characterised by** the fact that the control module (1, 201) contains two relays (101, 102) for controlling the solenoid valve (30, 40) and a time delay means (103) intended to delay the recycling of the fuel and to send the fuel to the fuel oil reservoir (F), when changing from fuel oil to diesel oil.

6. A device according to any one of the preceding claims, **characterised by** the fact that the block (2) comprising fluid circulation components directly supports a transparent receptacle (17) which allows direct display of the colour of the fuel.

7. A device according to any one of the preceding claims, **characterised by** the fact that the block (2) comprising fluid circulation components comprises or cooperates with a fuel cooler (24) located on a fuel return line (19).

8. A device according to any one of the preceding claims, **characterised by** the fact that the electric control module (1, 201) preferably comprises inputs connected to a first means (202) for indicating the upper level of fuel and a second means (203) for indicating the lower level of fuel.

9. A device according to any one of the preceding claims, **characterised by** the fact that the electric control module (201) is in the form of an electronic board (204) which includes a time lag means and is inserted into a closed casing to prevent any modification of operation.

10. A device according to Claim 9, **characterised by** the fact that the electronic board (204) comprises a microcontroller for programming this time lag means and for carrying out priority safety functions and nominal functions.

## Patentansprüche

1. Vorrichtung zur Versorgung eines Dieselmotors, die dazu bestimmt ist, eine Wahl der Versorgung mit Gasöl oder mit Dieselkraftstoff sicherzustellen, in Kombination **dadurch gekennzeichnet, daß** die Vorrichtung einen Schaltkasten (1, 201) aufweist, der mit einer Baugruppe (2) verbunden (15) ist, die Bauteile zum Umwälzen von Fluid umfaßt, daß ferner die Baugruppe (2), die Bauteile zum Umwälzen von Fluid umfaßt, mit einem Dieselkraftstoff-Tank (G) über nur eine Leitung (20) und mit einem Gasöl-Tank (F) über zwei Leitungen (21, 22) verbunden ist, und daß die Baugruppe (2), die Bauteile zum Umwälzen von Fluid umfaßt, mit dem Einspritzsystem (A) des Dieselmotors ausschließlich über eine Versorgungsleitung (18) und eine Rückführleitung (19) verbunden ist, um einen Einbau der Vorrichtung ohne Beeinträchtigung des Einspritzsystems (A) des Dieselmotors, für den die Vorrichtung bestimmt ist, zu gestatten.

2. Vorrichtung nach Anspruch 1, **dadurch gekennzeichnet, daß** der Schaltkasten (1, 201) mit einer Anzeigeeinrichtung (3, 11-13) auf dem Armaturenbrett des Fahrzeugs, für das die Vorrichtung bestimmt ist, verbunden ist.

3. Vorrichtung nach Anspruch 1 oder Anspruch 2, **dadurch gekennzeichnet, daß** die Baugruppe (2), die Bauteile zum Umwälzen von Fluid umfaßt, zwei Dreiwege-Elektroventile (30, 40) aufweist: ein Versorgungselektroventil (30) und ein Rückführelektroventil (40).

4. Vorrichtung nach einem der vorhergehenden Ansprüche, **dadurch gekennzeichnet, daß** die Baugruppe (2), die Bauteile zum Umwälzen von Fluid umfaßt, einen Druckregler (28) aufweist, der mit einem Elektroventil (40) zur Rückführung in den Gasöltank (F) zusammenwirkt.

5. Vorrichtung nach einem der vorhergehenden Ansprüche, **dadurch gekennzeichnet, daß** der Schaltkasten (1, 201) zwei Relais (101, 102) zur Steuerung von Elektroventilen (30, 40) und eine Zeitverzögerung (103) umfaßt, die dazu bestimmt ist, die Umwälzung des Kraftstoffs zu verzögern und den Kraftstoff beim Übergang von Gasöl zu Dieselkraftstoff dem Gasöltank (F) zuzuführen.

6. Vorrichtung nach einem der vorhergehenden Ansprüche, **dadurch gekennzeichnet, daß** die Baugruppe (2), die Bauteile zum Umwälzen von Fluid umfaßt, direkt einen transparenten Behälter (17) trägt, der die direkte Sichtbarmachung der Farbe des Kraftstoffs gestattet.

7. Vorrichtung nach einem der vorhergehenden Ansprüche, **dadurch gekennzeichnet, daß** die Baugruppe (2), die Bauteile zum Umwälzen von Fluid umfaßt, mit einem Kraftstoffkühler (24), der an einer Kraftstoff-Rückführleitung (19) angeordnet ist, versehen ist oder mit einem solchen zusammenwirkt..

8. Vorrichtung nach einem der vorhergehenden Ansprüche, **dadurch gekennzeichnet, daß** der elektrische Schaltkasten (1, 201) vorzugsweise Eingänge umfaßt, die mit einer ersten Einrichtung (202) zur Anzeige des oberen Kraftstoffniveaus und mit einer zweiten Einrichtung (203) zur Anzeige des unteren Kraftstoffniveaus verbunden sind.

9. Vorrichtung nach einem der vorhergehenden Ansprüche, **dadurch gekennzeichnet, daß** der elektrische Schaltkasten (201) in Form einer elektronischen Karte (204) mit integrierter Zeitverzögerung ausgebildet und in ein geschlossenes Gehäuse eingesetzt ist, um jegliche Modifikation der Funktionsweise zu verhindern.

10. Vorrichtung nach Anspruch 9, **dadurch gekennzeichnet, daß** die elektronische Karte (204) einen Mikrocontroller zum Programmieren dieser Zeitverzögerung und zum Sicherstellen von vorrangigen Sicherheitsfunktionen und von nominalen Funktionen umfaßt.
